# EUROPÄISCHE PATENTSCHRIFT

(11) **EP 0 734 423 B1**
(45) Veröffentlichungstag und Bekanntmachung des Hinweises auf die Patenterteilung: **17.10.2001**
(21) Anmeldenummer: 95901266.7
(22) Anmeldetag: 05.12.1994
(51) Int. Cl.: C09D 151/08, C08F 283/00

(54) **WASSERVERDÜNNBARE LACKBINDEMITTEL, DEREN HERSTELLUNG UND VERWENDUNG**
WATER-DILUTABLE ENAMEL PAINT BINDERS, A PROCESS FOR THEIR MANUFACTURE AND THEIR USE
LIANTS DE PEINTURES LAQUES DILUABLES DANS L'EAU, UN PROCEDE POUR LEUR PREPARATION ET LEUR UTILISATION

(30) Priorität: 06.12.1993 AT 246293
(43) Veröffentlichungstag der Anmeldung: 02.10.1996
(73) Patentinhaber: Solutia Austria GmbH, 8402 Werndorf (AT)
(72) Erfinder: TULACS, Laszlo, A-8010 Graz (AT); HIDEN, Hans, A-8321 St. Margarethen/Raab (AT); WILFINGER, Werner, A-8042 Graz (AT); LUTTENBERGER, Johann, A-8053 Graz (AT)
(74) Vertreter: Zounek, Nikolai, Dipl.-Ing.
(86) Internationale Anmeldenummer: AT9400186
(87) Internationale Veröffentlichungsnummer: WO9516004

(56) Entgegenhaltungen:
- WO-A-91/15528
- WO-A-92/14768
- FR-A- 2 103 441
- FR-A- 2 224 514
- FR-A- 2 402 672
- US-A- 4 318 833

## Beschreibung

Die Erfindung betrifft ein Verfahren zur Herstellung von wasserverdünnbaren Lackbindemitteln auf der Basis von Oligourethan-Acrylatcopolymerisaten sowie die nach diesem Verfahren herstellbaren Lackbindemittel und deren Verwendung zur Formulierung von Einbrennlacken.

Aus der umfangreichen Patentliteratur ist ersichtlich, daß Lackbindemittel, die Urethangruppen und Anteile von Acrylatcopolymerisaten enthalten, in Form von Dispersionen zunehmend an Bedeutung für die Formulierung von hochwertigen wasserverdünnbaren ofentrocknenden Decklacken gewinnen. Als Beispiele seien Produkte genannt, wie sie in DE 3210051 A1, DE 3628124 A1, DE 3628125 A1, DE 3841540 A1, DE 4223182 C1, EP 0226171 B1, E? 0297576 B1 und EP 0438090 A1 beschrieben sind. Derartige Lackbindemittel liegen vielfach als Mischungen vor, in denen die Bindemittelkomponenten nicht ausreichend verträglich und damit formulierte Lacke zu wenig lagerfähig sind.

In der US-PS 4,317,895 werden thermoplastische Acryl-Urethan-Copolymere als nicht wasserverdünnbare Bindemittel für Autodecklacke empfohlen, wobei als Lösemittel bevorzugt Ketone und Acetate zum Einsatz kommen.

Analoge, jedoch wasserverdünnbare Produkte sind aus der US-PS 4,318,833 bekannt. Sie werden durch Polymerisation von ethylenisch ungesättigten Monomeren, vorzugsweise von (Meth) acrylsäureestern, in Gegenwart von Polyurethanen, deren Verdünnbarkeit in Wasser durch den Einbau von Dimethylolpropionsäure erreicht wird, erhalten.

In der WO-A 91/15528 wird ein Verfahren zur Herstellung einer mehrschichtigen Lackierung beschrieben, wobei ein wäßriger Basislack eingesetzt wird. Das Bindemittel enthält ein Polymer, zu dessen Herstellung äthylenisch ungesättigte Monomere in Gegenwart eines Polyurethans polymerisiert werden das polymerisierbare Doppelbindungen enthält.

Aus der WO-A 92/14768 ist ein einphasiges Pfropfcopolymer bekannt, das ein Reaktionsprodukt von einem Polyurethan und (Meth)acrylmonomeren ist.

Es wurde nun gefunden, daß wasserverdünnbare Acryl-Urethan-Copolymere in der Weise hergestellt werden können, daß als Ausgangsprodukt ein wasserunlösliches Oligourethan verwendet wird und durch die Mitverwendung von (Meth)acrylsäure in der Monomerenmischung Carboxylgruppen in das Bindemittel eingeführt werden.

Die vorliegende Erfindung betrifft demgemäß ein Verfahren zur Herstellung von nach zumindest teilweiser Neutralisation der Carboxylgruppen wasserverdünnbaren Lackbindemitteln auf der Basis von Oligourethan-Acrylatcopolymerisaten, wobei man
(A) eine Monomerenmischung, welche
   (Aa) 40 bis 70 Gew.-% Alkyl(meth)acrylate, deren Alkylreste 2 bis 4 C-Atome aufweisen,
   (Ab) 5 bis 20 Gew.-% Hydroxyalkyl(meth)acrylate, deren Alkylenreste 2 bis 4 C-Atome aufweisen,
   (Ac) 3 bis 15 Gew.-% (Meth)acrylsäure,
   (Ad) 10 bis 35 Gew.-% aromatische Vinylverbindungen, vorzugsweise Styrol,
   enthält, wobei die Summe der Prozentzahlen für die Komponenten (Aa) bis (Ad) die. Zahl 100 ergeben muß und die Komponenten (Aa) bis (Ad) so ausgewählt werden, daß theoretisch ein entsprechendes Acrylatcopolymerisat eine Säurezahl von 30 bis 90 mg KOH/g, eine Hydroxylzahl von 30 bis 50 mg KOH/g sowie eine Glasübergangstemperatur von -5 bis +25°C aufweisen würde,
   in einem mit Wasser verdünnbaren organischen Lösemittel in Gegenwart eines radikalbildenden Polymerisationsinitiators und eines
(B) wasserunlöslichen Oligourethans, welches durch die Reaktion eines aliphatischen Esterdiols oder eines Gemisches solcher Diole mit Diisocyanaten erhalten wurde, keine freien Isocyanatgruppen enthält, sowie eine Hydroxylzahl von 110 bis 150 mg KOH/g, einen Stickstoffgehalt von 2,8 bis 3,7 Gew.-% und eine Molekularmasse von 750 bis 1000 aufweist,

copolymerisiert, mit der Maßgabe, daß der Anteil der Komponente (B) am Endprodukt (AB) 35 bis 60 Gew.-% beträgt und dieses eine Säurezahl von 15 bis 45 mg KOH/g, eine Hydroxylzahl von 75 bis 110 mg KOH/g sowie eine Grenzviskositätszahl (1,5%ig in Chloroform/20°C) von 13,5 bis 16,5 ml/g aufweist.

Die Erfindung betrifft weiters die nach diesem Verfahren herstellbaren wasserverdünnbaren Lackbindemittel und deren Verwendung in Kombination mit Vernetzungskomponenten und gegebenenfalls mit anderen Lackbindemitteln zur Formulierung von Einbrennlacken.

Die Polymerisation einer spezifischen Monomerenmischung erfolgt somit in Gegenwart des wasserunlöslichen Oligourethans, wobei das entstehende Polymerisat zunehmend als Emulgator für das wasserunlösliche Oligourethan wirkt, welches mit dem entsprechenden Acrylatcopolymerisat in Mischung nicht verträglich ist (siehe Vergleichsbeispiele).

Die für das erfindungsgemäße Verfahren verwendeten Rohstoffe und Herstellungsmethoden sind dem Fachmann grundsätzlich bekannt, sodaß nur auf spezifische Auswahlkriterien hingewiesen werden soll.

Die Monomerenmischung (A) enthält anspruchsgemäß
- (Aa) 40 bis 70 Gew.-%: Alkyl(meth)acrylate, deren Alkylreste 2 bis 4 C-Atome aufweisen,
- (Ab) 5 bis 20 Gew.-%: Hydroxyalkyl(meth)acrylate, deren Alkylenreste 2 bis 4 C-Atome aufweisen,
- (Ac) 3 bis 15 Gew.-%: (Meth)acrylsäure,
- (Ad) 10 bis 35 Gew.-%: aromatische Vinylverbindungen, vorzugsweise Styrol,
wobei die Summe der Prozentzahlen für die Komponenten (Aa) bis (Ad) 100 ergeben muß. Für die Auswahl der Monomerenzusammensetzung gilt weiters die Forderung, daß theoretisch ein entsprechendes Acrylatcopolymerisat eine Säurezahl von 30 bis 90 mg KOH/g, eine Hydroxyizahl von 30 bis 50 mg KOH/g sowie eine Glasübergangstemperatur von -5 bis +25°C aufweisen würde.

Das wasserunlösliche Oligourethan (B) wird durch die Umsetzung eines aliphatischen Esterdiols oder eines Gemisches solcher Diole mit Diisocyanaten erhalten. Geeignete Diole und Diisocyanate sind beispielsweise in der EP 0089497 B1 beschrieben, bevorzuge werden Esterdiole aus linearen aliphatischen Diolen und Dicarbonsäuren mit jeweils 2 bis 6 Kohlenstoffatomen im Molekul sowie Toluylendiisocyanat (als handelsübliches Isomerengemisch) und 3-(Isocyanatomethyl)-3,5,5-trimethylcyclohexylisocyanat (Isophorondiisocyanat) eingesetzt.

Das wasserunlösliche Oligourethan (B) enthält keine freien Isocyanatgruppen und es wird durch eine Hydroxylzahl von 110 bis 150 mg KOH/g, einen Stickstoffgehalt von 2,8 bis 3,7 Gew.-% und eine Molekularmasse von 750 bis 1000 definiert.

Die Copolymerisation der Monomerenmischung (A) erfolgt in Gegenwart des wasserunlöslichen Oligourethans (B) in der Weise, daß die Monomerenmischung (A) und der Polymerisationsinitiator zu einer Lösung des wasserunlöslichen Oligourethans (B) in mit Wasser verdünnbaren organischen Lösemitteln, wie Monoalkoholen oder Glykolethern, kontinuierlich zugegeben werden.

Der Anteil der Komponente (B) am Endprodukt (AB) beträgt 35 bis 60 Gew.-%. Dieses weist eine Säurezahl von 15 bis 45 mg KOH/g, eine Hydroxylzahl von 75 bis 110 mg KOH/g sowie eine Grenzviskositätszahl (1,5%ig in Chloroform/20°C) von 13,5 bis 16,5 ml/g auf.

Das Oligourethan-Acrylatcopolymerisat wird durch zumindest teilweise Neutralisation der Carboxylgruppen mit organischen Basen, vorzugsweise mit tertiären Alkyl- bzw. Alkanolaminen, in eine wasserverdünnbare Form übergeführt. Gegebenenfalls können die bei der Herstellung verwendeten organischen Lösemittel während des Verdünnungsvorgangs ganz oder teilweise durch Vakuumdestillation entfernt werden.

Die erfindungsgemäß herstellbaren Bindemittel dienen in Kombination mit Vernetzungskomponenten und gegebenenfalls mit anderen Lackbindemitteln zur Formulierung von hochwertigen Einbrennlacken,

Insbesonders geeignet sind die erfindungsgemäß herstellbaren Bindemittel zur Herstellung von wasserverdünnbaren Basislacken, wie sie beispielsweise in der Automobil-Serienlackierung für Zweischicht-Decklacke, welche aus einer farb- und/oder effektgebenden Basislackschicht und einer Klarlackschicht bestehen, eingesetzt werden.

Derartige wasserverdünnbare Basislacke enthalten weiters, gegebenenfalls in Kombination mit zusätzlichen wasserverdünnbaren Bindemitteln, Vernetzungskomponenten, bevorzugt Aminoharze und/oder blockierte Polyisocyanate, sowie die dem Fachmann geläufigen Pigmente, Füllstoffe und Additive.

Als zusätzliche wasserverdünnbare Bindemittel, die auch als Pastenharze verwendet werden können, kommen vor allem Polyester-, Polyacrylat- und Polyurethanharze in Betracht.

Die wasserverdünnbaren Basislacke werden in bekannter Weise in Kombination mit Klarlacken appliziert und bei Temperaturen bis zu 160°C vernetzt.

Die Beispiele erläutern die Erfindung, ohne sie in ihrem Umfang einzuschränken. Alle Angaben in Teilen oder Prozenten beziehen sich auf Gewichtseinheiten. Folgende Abkürzungen werden in den Beispielen verwendet:
- TDI: Toluylendiisocyanat (handelsübliches Isomerengemisch, MG 174)
- IPDI: Isophorondiisocyanat (3- (Isocyanatomethyl)-3,5,5-trimethylcyclohexylisocyanat, MG 222)
- BUGL: Monoethylenglykolmonobutylether
- AS: Acrylsäure
- MS: Methacrylsäure
- ASEE: Ethylacrylat
- ASBE: n-Butylacrylat
- MSME: Methylmethacrylat
- MSIBE: Isobutylmethacrylat
- STY: Styrol
- MSTY: p-Methylstyrol
- HPA: 2-Hydroxypropylacrylat
- HBA: 4-Hydroxybutylacrylat
- HEMA: Hydroxyethylmethacrylat
- HPMA: 2-Hydroxypropylmethacrylat

### 1. Herstellung der Oligourethane (B1) bis (B5)

### 1.1. Allgemeine Herstellvorschrift (siehe dazu Tabelle 1)

2 Mol eines Esterdiols aus 2 Mol eines linearen aliphatischen Diols und einem Mol einer linearen aliphatischen Dicarbonsäure (hergestellt in Gegenwart von 0,2 - 0,4 g Dibutylzinndilaurat) werden mit 1 Mol eines Diisocyanats in der Weise umgesetzt, daß das Reaktionsprodukt keine freien Isocyanatgruppen, eine Säurezahl von weniger als 3 mg KOH g und eine OH-Zahl gemäß den Angaben in Tabelle 1 aufweist. Das Oligourethan mit einem Feststoffgehalt von mindestens 98 Gew.-% wird mit BUGL auf einen Feststoffgehalt von 75 Gew.-% verdünnt.

### 2. Beispiele 1 bis 5

### Herstellung der Oligourethan-Acrylatcopolymerisate (AB1) bis (AB5)

### 2.1. Allgemeine Herstellvorschrift (siehe dazu Tabelle 2)

In einem mit Rührwerk, Initiatorzulaufgefäß, Monomerenzulaufgefäß, Thermometer, Inertgaseinrichtung, Heizung und Rückflußkühler ausgestattetem Reaktionsgefäß werden 67 Tle BUGL sowie das Oligourethan, 75%ig in BUGL, vorgelegt und unter Inertgasüberlagerung auf 125°C erhitzt. Dann werden die Monomerenmischung und Di-tert.-Butylperoxid (1 Teil, als 20%ige Lösung in BUGL) parallel mit einer solchen Geschwindigkeit zugegeben, daß die Zugabe nach 6 Stunden abgeschlossen ist. Nach weiteren 2 Stunden bei 125°C wird dem Ansatz nochmals Di-tert.-Butylperoxid (0,5 Teile) zugegeben. Die Reaktionstemperatur wird auf 150°C erhöht und während 3 Stunden gehalten. Das Oligourethan-Acrylatcopolymerisat mit den Kennzahlen entsprechend den Angaben in Tabelle 2 wird mit BUGL auf einen Feststoffgehalt von 60 Gew.-% verdünnt.

### 3. Vergleichsbeispiele 1 bis 5

### Herstellung der Acrylatcopolymerisate (C1) bis (C5)

### 3.1. Allgemeine Herstellvorschrift (siehe dazu Tabelle 2)

Entsprechend den Angaben unter 2.1. werden 35 Teile BUGL vorgelegt, die Monomerenmischung wird unter gleichen Reaktionsbedingungen polymerisiert und mit BUGL auf einen Feststoffgehalt von 60 % verdünnt (Kennzahlen siehe Tabelle 2).

Die Mischungen der Acrylatcopolymerisate (C1) bis (C5) mit den Oligourethanen (B1) bis (B5) entsprechend den Verhältnissen in (AB1) bis (AB5) sind nicht verträglich (Trübungen bzw. Phasentrennung).

### 4. Lacktechnische Ausprüfung der Oligourethan-Acrylatcopolymerisate (AB1) bis (AB5)

### 4.1. Wasserverdünnbarer Weißlack

Wasserverdünnbare Weißlacke in der Zusammensetzung Acrylatcopolymerisat/Resydrol® WM 501¹⁾ = 78/22, TiO₂ Kronos® CL 310²⁾ / gesamtes Lackbindemittel = 1/1 (jeweils auf Feststoff bezogen), welche handelsübliche Verlaufmittel und Entschäumer enthalten, werden auf Stahlbleche appliziert und 30 Minuten bei 140°C eingebrannt.
¹⁾ reaktives, wasserverträgliches Melaminharz, Hersteller: VIANOVA KUNSTHARZ AG, AT
²⁾ Rutil-Type : KRONOS, DE

Die Lackfilme weisen einen guten Glanz, ausgezeichnete mechanische Eigenschaften und eine gute Beständigkeit gegen Aceton auf.

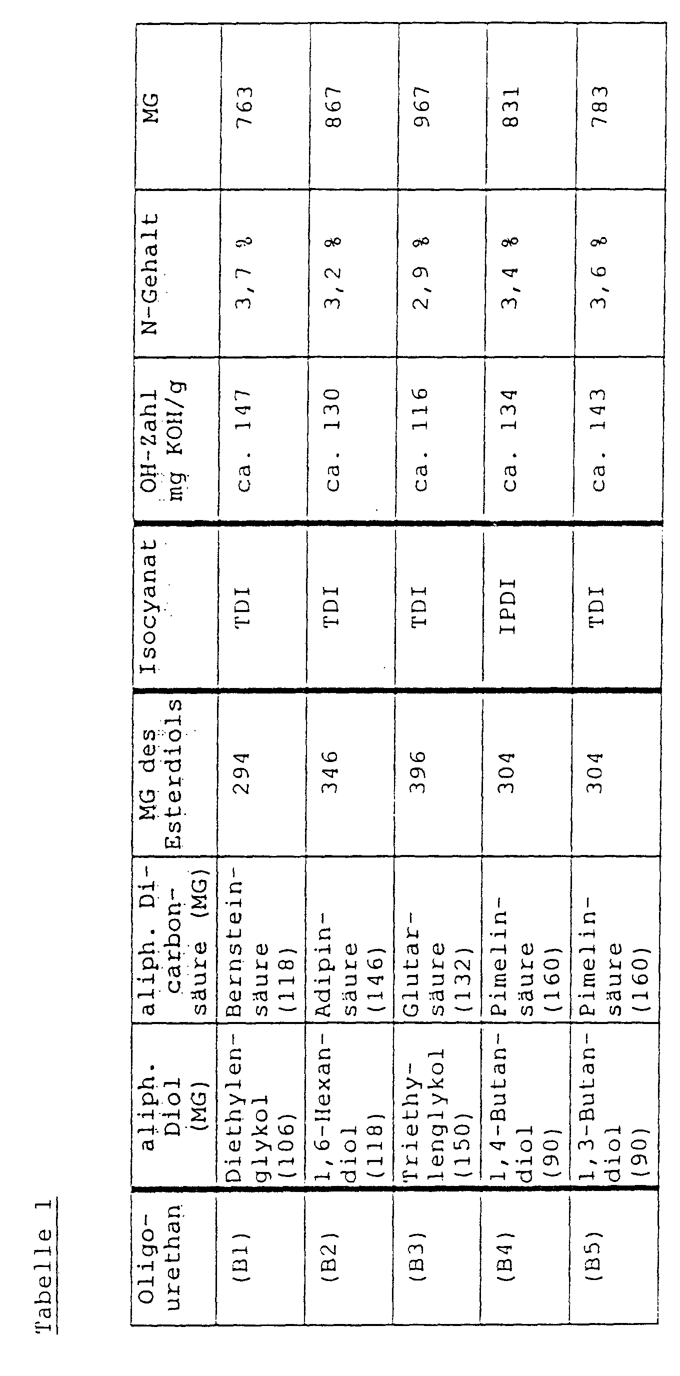

**Tabelle 2**

| Beispiel | 1 | 2 | 3 | 4 | 5 |
|---|---|---|---|---|---|
| | (AB1) | (AB2) | (AB3) | (AB4) | (AB5) |
| Oligourethan (B) (als Feststoff) | | | | | |
| (B1) | 30 | | | 60 | 120 |
| (B2) | 70 | | | 40 | |
| (B3) | | 30 | | | |
| (B4) | | 70 | | | |
| (B5) | | | 60 | | |
| Monomerenmischungen (A1) bis (A5) bzw. | | | | | |
| Acrylatcopolymerisate (C1) bis (C5) | | | | | |
| AS | 7,5 | | 8,0 | 5,0 | 8,0 |
| MS | | 12,0 | | | |
| ASEE | 55,0 | 20,0 | 37, 0 | 60,0 | 50,0 |
| ASBE | | 25,0 | | | |
| MSME | 12,5 | | 28,0 | | |
| MSIBE | | 22,0 | | | |
| STY | 15,0 | | 15,0 | 27,0 | 30,0 |
| MSTY | | 10,0 | | | |
| HPA | 10,0 | | 12,0 | | |
| HBA | | 11,0 | | | |
| HEMA | | | | 8,0 | |
| HPMA | | | | | 12,0 |
| SZ mg KOH/g | 58 | 78 | 62 | 39 | 62 |
| OH-Z mg KOH/g | 43 | 43 | 47 | 34 | 47 |
| Tg in °C | 7,2 | 0,1 | 24,3 | 13,5 | 20,4 |
| Anteil an (B) | | | | | |
| in Gew.-% | 50 | 50 | 37,5 | 50 | 54,5 |
| SZ mg KOH/g | 29 | 39 | 38 | 19 | 28 |
| OH-Z mg KOH/g | 89 | 86 | 82 | 87 | 100 |
| GVZ ml/g | 15,2 | 16,2 | 14,9 | 14,1 | 13,9 |

### 4.2. Lindgrüner wasserverdünnbarer Basislack

### 4.2.1. Herstellung einer grünen Pigmentpaste

20 Teile eines chlorierten Phthalocyaninpigments werden mit einem Dissolver in einer Mischung aus 20 Teilen eines Pastenharzes gemäß EP 0438090 A1 (Pastenharz 1), 35 Teilen Butoxyethanol und 0,5 Teilen Dimethylethanolamin vordispergiert und anschließend auf einer Perlmühle dispergiert. Danach wird die Pigmentpaste mit 24,5 Teilen vollentsalztem Wasser verdünnt.

### 4.2.2. Herstellung einer weißen Pigmentpaste

60 Teile Titandioxid werden mit einem Dissolver in einer Mischung aus 10 Teilen eines Pastenharzes gemäß E? 0438090 A1 (Pastenharz 1), 15 Teilen Butoxyethanol und 0,5 Teilen Dimethylethanolamin vordispergiert und anschließend auf einer Perlmühle dispergiert. Danach wird die Pigmentpaste mit 14,5 Teilen vollentsalztem Wasser verdünnt.

### 4.2.3. Herstellung und Applikation des lindgrünen wasserverdünnbaren Basislacks

In einem Dissolver werden 11 Teile des Oligourethan-Acrylatcopolymerisats (AB 4) mit 0,5 Teilen Dimethylethanolamin neutralisiert. Es werden 12 Teile eines 2 : 1-Gemisches aus Butylglykol und Butyldiglykol, 2 Teile eines handelsüblichen Entschäumers, 4 Teile eines sauren Acrylatverdickers, 24 Teile einer Polyurethan-Dispersion gemäß DE-A-4224617 (Herstellungsbeispiel 2) und 5 Teile Vernetzer (Cymel 323) zugegeben, Nach dem Homogenisieren der Mischung werden dem Ansatz 10 Teile der unter 4.2.1. erhaltenen grünen Pigmentpaste und 3 Teile der unter 4.2.2. erhaltenen weißen Pigmentpaste zugegeben. Es wird nochmals homogen vermischt und mit 28,5 Teilen vollentsalztem Wasser verdünnt.

Der Basislack wird auf ein phosphatiertes und mit einer kathodischen Tauchlackierung und einem Füller vorbeschichtetes Karosserieblech durch Spritzen in einer Trockenschichtdicke von 20 µm aufgebracht. Anschließend wird bei Raumtemperatur 10 Minuten abgelüftet, 10 Minuten bei 80°C vorgetrocknet und ein handelsüblicher, melaminharzhärtender Autoserienklarlack auf Acrylatharzbasis in einer Trockenschichtdikke von 35 µm überlackiert. Der Zweischicht-Decklack wird 30 Minuten bei 130°C (Objekttemperatur) eingebrannt.

Die so erhaltene Mehrschicht-Lackierung entspricht in ihren optischen und mechanischen Eigenschaften allen von der Automobilindustrie gestellten Anforderungen.

## Patentansprüche

1. Verfahren zur Herstellung von nach zumindest teilweiser Neutralisation der Carboxylgruppen wasserverdünnbaren Lackbindemitteln auf der Basis von Oligourethan-Acrylatcopolymerisaten, wobei man
(A) eine Monomerenmischung, welche
(Aa) 40 bis 70 Gew.-% Alkyl(meth)acrylate, deren Alkylreste 2 bis 4 C-Atome aufweisen,
(Ab) 5 bis 20 Gew.-% Hydroxyalkyl(meth)acrylate, deren Alkylenreste 2 bis 4 C-Atome aufweisen,
(Ac) 3 bis 15 Gew.-% (Meth)acrylsäure,
(Ad) 10 bis 35 Gew.-% aromatische Vinylverbindungen, vorzugsweise Styrol, enthält,
wobei die Summe der Prozentzahlen für die Komponenten (Aa) bis (Ad) die Zahl 100 ergeben muß und die Komponenten (Aa) bis (Ad) so ausgewählt werden, daß theoretisch ein entsprechendes Acrylatcopolymerisat eine Säurezahl von 30 bis 90 mg KOH/g, eine Hydroxylzahl von 30 bis 50 mg KOH/g sowie eine Glasübergangstemperatur von -5 bis +25 °C aufweisen würde,
in einem mit Wasser verdünnbaren organischen Lösemittel in Gegenwart eines radikalbildenden Polymerisationsinitiators und eines
(B) wasserunlöslichen Oligourethans, welches durch die Reaktion eines aliphatischen Esterdiols oder eines Gemisches solcher Diole mit Diisocyanaten erhalten wurde, keine freien Isocyanatgruppen enthält, sowie eine Hydroxylzahl von 110 bis 150 mg KOH/g, einen Stickstoffgehalt von 2,8 bis 3,7 Gew.-% und eine Molekularmasse von 750 bis 1000 aufweist,
copolymerisiert, mit der Maßgabe, daß der Anteil der Komponente (B) am Endprodukt (AB) 35 bis 60 Gew.-% beträgt und dieses eine Säurezahl von 15 bis 45 mg KOH/g, eine Hydroxylzahl von 75 bis 110 mg KOH/g sowie eine Grenzviskositätszahl (1,5%ig in Chloroform /20 °C) von 13,5 bis 16,5 ml/g aufweist.

2. Wasserverdünnbare Lackbindemittel auf der Basis von Oligourethan-Acrylatcopolymerisaten (AB), herstellbar gemäß Anspruch 1, mit einer Säurezahl von 15 bis 45 mg KOH/g, einer Hydroxylzahl von 75 bis 110 mg KOH/g sowie einer Grenzviskositätszahl (1,5%ig in Chloroform /20 °C) von 13,5 bis 16,5 ml/g, wobei der Anteil der Komponente (B) am Endprodukt (AB) 35 bis 60 Gew% beträgt.

3. Verwendung der Oligourethan-Acrylatcopolymerisate (AB) nach Anspruch 2 als wasserverdünnbare Lackbindemittel in Kombination mit Vernetzungskomponenten und gegebenenfalls mit anderen Lackbindemitteln zur Formulierung von Einbrennlacken.

4. Verwendung der Oligourethan-Acrylatcopolymerisate (AB) nach Anspruch 2 als wasserverdünnbare Lackbindemittel in Kombination mit Vernetzungskomponenten und gegebenenfalls mit anderen Lackbindemitteln zur Formulierung von wasserverdünnbaren Basislacken.

5. Verfahren zur Herstellung von Zweischichtlackierungen, **dadurch gekennzeichnet, daß** die Basislackschicht unter Verwendung eines wasserverdünnbaren Lackbindemittels gemäß Anspruch 2 hergestellt wurde.

## Claims

1. Process for the preparation of coating binders based on oligourethane-acrylate copolymers, which are dilutable in water following at least partial neutralization of the carboxyl groups, where
(A) a monomer mixture containing
(Aa) from 40 to 70 % by weight of alkyl (meth)acrylates whose alkyl radicals have 2 to 4 carbon atoms,
(Ab) from 5 to 20 % by weight of hydroxyalkyl (meth)acrylates whose alkylene radicals have 2 to 4 carbon atoms,
(Ac) from 3 to 15 % by weight of (meth)acrylic acid,
(Ad) from 10 to 35 % by weight of aromatic vinyl compounds, preferably styrene,
the sum of the percentages for components (Aa) to (Ad) necessarily giving the number 100, and the components (Aa) to (Ad) being selected such that in theory a corresponding acrylate copolymer would have an acid number of from 30 to 90 mg of KOH/g, a hydroxyl number of from 30 to 50 mg of KOH/g and a glass transition temperature of from -5 to +25°C,
is copolymerized in a water-dilutable organic solvent in the presence of a free-radical polymerization initiator and of a
(B) water-insoluble oligourethane which has been obtained by the reaction of an aliphatic ester diol or of a mixture of such diols with diisocyanates, contains no free isocyanate groups and has a hydroxyl number of from 110 to 150 mg of KOH/g, a nitrogen content of from 2.8 to 3.7 % by weight and a molecular mass of from 750 to 1000,
with the proviso that the proportion of component (B) in the end product (AB) is from 35 to 60 % by weight and said end product has an acid number of from 15 to 45 mg of KOH/g, a hydroxyl number of from 75 to 110 mg of KOH/g and an intrinsic viscosity (1.5 % strength in chloroform/20°C) of from 13.5 to 16.5 ml/g.

2. Water-dilutable coating binders based on oligourethane-acrylate copolymers (AB), preparable according to Claim 1, having an acid number of from 15 to 45 mg of KOH/g, a hydroxyl number of from 75 to 110 mg of KOH/g and an intrinsic viscosity (1.5 % strength in chloroform /20°C) of from 13.5 to 16.5 ml/g, the proportion of component (B) in the end product (AB) being from 35 to 60 % by weight.

3. Use of the oligourethane-acrylate copolymers (AB) according to Claim 2 as water-dilutable coating binders, in combination with crosslinking components and, if desired, with other coating binders, in the formulation of stoving enamels.

4. Use of the oligourethane-acrylate copolymers (AB) according to Claim 2 as water-dilutable coating binders, in combination with crosslinking components and, if desired, with other coating binders, for the formulation of water-dilutable basecoats.

5. Process for the production of two-coat paint systems, **characterized in that** the basecoat was prepared using a water-dilutable coating binder according to Claim 2.

## Revendications

1. Procédé pour la préparation de liants de peintures diluables à l'eau après neutralisation au moins partielle des groupes carboxyle sur la base de copolymérisats oligouréthane-acrylate, dans lequel on copolymérise
(A) un mélange de monomères, qui contient
(Aa) de 40 à 70% en poids de (méth)acrylate d'alkyle, dont les groupes alkyle présentent de 2 à 4 atomes de carbone ;
(Ab) de 5 à 20% en poids de (méth)acrylate d'hydroxyalkyle, dont les groupes alkylène présentent de 2 à 4 atomes de carbone ;
(Ac) de 3 à 15% en poids d'acide (méth)acrylique,
(Ad) de 10 à 35% en poids de composés de vinyle, aromatiques, de préférence de styrène,
dans lequel la somme des chiffres en pour cent pour les composants (Aa) à (Ad) doit donner le nombre 100 et les composants (Aa) à (Ad) sont choisis de manière à ce que théoriquement un copolymérisat d'acrylate présente un indice d'acide de 30 à 90 mg KOH/g, un indice d'hydroxyle de 30 à 50 mg KOH/g et une température de transition vitreuse de -5 à +25°C,
dans un solvant organique diluable à l'eau en présence d'un initiateur de polymérisation générant des radicaux libres et un
(B) oligouréthane insoluble dans l'eau, qui est obtenu par la réaction d'un esterdiol aliphatique ou d'un mélange de tels diols avec des diisocyanates, ne contient pas de groupe isocyanate libre, et présente un indice d'hydroxyle de 110 à 150 mg KOH/g, une teneur en azote de 2,8 à 3,7% en poids, et une masse moléculaire de 750 à 1000,
avec la condition que la proportion du composant (B) dans le produit final (AB) s'élève à entre 35 et 60% en poids et que celui-ci présente un indice d'acide compris entre 15 et 45 mg KOH/g, un indice d'hydroxyle de 75 à 110 mg KOH/g ainsi qu'un indice de viscosité limite (1,5% dans le chloroforme/20°C) de 13,5 à 16,5 ml/g.

2. Liant de peinture diluable à l'eau à base de copolymérisats oligouréthane-acrylate (AB), qu'on peut préparer selon la revendication 1, ayant un indice d'acide de 15 à 45 mg KOH/g, un indice d'hydroxyle de 75 à 110 mg KOH/g et un indice de viscosité limite (1,5% dans le chloroforme/ 20°C) de 13,5 à 16,5 ml/g, dans lequel la proportion du composant (B) dans le produit final (AB) s'élève à entre 35 et 60% en poids.

3. Utilisation des copolymérisats oligouréthane-acrylate (AB) selon la revendication 2 comme liants de peinture diluables à l'eau en combinaison avec des composants de réticulation et éventuellement avec d'autres liants de peinture pour la formulation de peintures à cuire.

4. Utilisation des copolymérisats oligouréthane-acrylate (AB) selon la revendication 2 comme liants de peinture diluables à l'eau en combinaison avec des composants de réticulation et éventuellement avec d'autres liants de peinture pour la formulation de laques de base diluables à l'eau.

5. Procédé pour la préparation de peintures à deux couches, **caractérisé en ce que** la couche de laque de base est préparée en utilisant un liant de peinture diluable à l'eau selon la revendication 2.
